# EUROPÄISCHE PATENTSCHRIFT

(11) **EP 1 516 237 B1**
(45) Veröffentlichungstag und Bekanntmachung des Hinweises auf die Patenterteilung: **29.02.2012**
(21) Anmeldenummer: 03717213.7
(22) Anmeldetag: 15.03.2003
(51) Int. Cl.: G05D 7/01

(54) **DURCHFLUSSMENGENREGLER**
FLOW RATE REGULATOR
REGULATEUR DE DEBIT

(30) Priorität: 26.06.2002 DE 10228490
(43) Veröffentlichungstag der Anmeldung: 23.03.2005
(73) Patentinhaber: Neoperl GmbH, 79379 Müllheim (DE)
(72) Erfinder: WEIS, Christoph, 79379 Müllheim (DE)
(74) Vertreter: Maucher, Wolfgang
(86) Internationale Anmeldenummer: PCT/EP2003/002726
(87) Internationale Veröffentlichungsnummer: WO 2004/003673

(56) Entgegenhaltungen:
- DE-A- 2 131 117
- DE-A- 2 707 750
- DE-U- 29 912 207

## Beschreibung

Die Erfindung betrifft einen Durchflussmengenregler mit einer Regler-Einheit, die ein Reglergehäuse hat, das in einem Durchtrittskanal einen Steuerzapfen oder Regelkern aufweist, den ein ringförmiger Drosselkörper aus elastischem Material umgreift, welcher Drosselkörper zwischen sich sowie dem Steuerzapfen und/oder dem Gehäuse-Innenumfang einen Steuerspalt begrenzt, dessen Durchtrittsquerschnitt durch den sich unter der beim Durchströmen bildenden Druckdifferenz verformenden Drosselkörper veränderbar ist.
Aus der DE 199 32 596 A1 ist bereits ein Durchflussmengenregler bekannt, der in seinem Reglergehäuse einen Steuerzapfen aufweist, den ein ringförmiger Drosselkörper aus elastischem Material umgreift. Der vorbekannte Durchflussmengenregler weist sowohl zwischen dem Drosselkörper und der den Durchtrittskanal begrenzenden inneren Mantelfläche des Reglergehäuses als auch zwischen den Drosselkörper und der Umfangs-Mantelfläche des Steuerzapfens jeweils einen Steuerspalt auf, dessen Durchtrittsquerschnitt durch den sich unter der beim Durchströmen bildenden Druckdifferenz verformenden Drosselkörper veränderbar ist. Der vorbekannte Durchflussmengenregler bietet den Vorteil, dass man den niederen Druckbereich durch sich schnell verschließende Regulierausnehmungen erfassen kann, während die im hohen Druckbereich ansprechenden Regulierausnehmungen vom Drosselkörper erst geschlossen werden, wenn dieser vom Flüssigkeitsdruck bereits sehr stark belastet wird; auf diese Weise erreicht der aus DE 199 32 596 A1 vorbekannte Durchflussmengenregler die pro Zeiteinheit gewünschte Durchflussmenge auch bei steigenden und sehr stark schwankenden Flüssigkeitsdrücken weitestgehend konstant.

In solchen Ländern, in denen die Trinkwasserleitungen einen vergleichsweise großen Leitungsquerschnitt haben und in denen geodätische Druckverhältnisse im Trinkwassernetz genutzt werden, besteht bei mehrstöckigen Gebäuden häufig das Problem, dass ein wasserspritzen der Toilettenspülung vermindert oder eine Wasserverschwendung vermieden werden muss, weil andernfalls der beispielsweise auf dem Dach des Gebäudes befindliche Wassertank rasch leer ist.

Aus Figur 6 der DE 21 31 117 A ist ein gattungsgemäßer Durchflussmengenregler mit einer Regler-Einheit bekannt, die ein Reglergehäuse hat, das in einem Durchtrittskanal einen Steuerzapfen oder Regelkern aufweist, den ein ringförmiger Drosselkörper aus elastischem Material umgreift. Dieser Drosselkörper begrenzt zwischen sich sowie dem Steuerzapfen einen Steuerspalt, dessen Durchtrittsquerschnitt durch den sich unter der beim Durchströmen bildenden Druckdifferenz verformenden Drosselkörper veränderbar ist.

In den Steuerzapfen oder Regelkern des aus DE 21 31 117 A vorbekannten Durchflussmengenreglers ist nicht ein weiterer Durchflussmengenregler -, sondern vielmehr ein Einlaufventil eingebaut, das einen Ventilkegel aufweist, der in elastischen widerhakenförmigen Führungsstegen geführt und von einer Schraubendruckfeder angehoben wird. Das Einlaufventil 6 hat die Aufgabe, bei niedrigem Anschlussdruck, wenn in extrem gelagerten Fällen die muldenförmigen Vertiefungen in der Dichtfläche die Einlaufwassermenge noch nicht ausreichend erhöhen, einen zusätzlichen Flüssigkeitsdurchgang zu schaffen. Dabei ist die den Ventilkegel in Offenstellung haltende Schraubendruckfeder kräftemäßig so ausgelegt, dass sie bei Erreichen der Regelmenge von dem auf den Ventilkegel wirkenden Differenzdruck überwunden wird, so dass dieser nun geschlossen werden kann und damit der Flüssigkeitsmengenregler allein voll wirksam wird.

Aus der DE 27 07 750 A kennt man einen Durchflussmengenregler mit einem ein Fluid führenden Rohr, in dem ein mit Schlitzen versehener Körper gelagert ist. Dieser mit Schlitzen versehene Körper, der mit einem elastischen Ring zusammenwirkt, welcher sich unter dem Fluiddruck an den geschlitzten Körper anlegt, weist eine koaxiale Bypass-Strecke mit schräg radial angeordneten Zulauföffnungen auf, denen eine elastische Scheibe als Schließorgan vorgeschaltet ist. Der geschlitzte Formkörper weist Schlitze und Stege auf, wobei die Stege mit Ausnehmungen versehen sind, um die ein schlauchartiger Abschnitt aus Gummi mit konstantem Innen- und Außendurchmesser angeordnet ist.

Dabei kann das zu regelnde Fluid zunächst durch die Schlitze und die Bypass-Strecke strömen. Mit zunehmendem Fließdruck verschließt die elastische Scheibe die Zulauföffnungen der Bypass-Strecke, so dass das Fluid nur noch durch die Schlitze fließen kann. Mit weiter zunehmendem Fließdruck drückt sich der Schlauchabschnitt in die Ausnehmungen, so dass der dem Fluid zur Verfügung stehende Querschnitt weiter verkleinert wird. Das hat zur Folge, dass bei geeigneter Dimensionierung der Fluid-Durchsatz bei weiter zunehmendem Fließdruck konstant bleibt. Auch der aus DE 27 07 750 A vorbekannte Durchflussmengenregler weist somit nicht einen weiteren Durchflussmengenregler -, sondern vielmehr ebenfalls einen Bypass-Kanal mit einem als elastische Scheibe ausgestalteten Einlaufventil auf.

Es besteht daher die Aufgabe, einen präzise eingeregelten Durchflussmengenregler der eingangs erwähnten Art auch für vergleichsweise große Leitungsquerschnitte zu schaffen.

Die erfindungsgemäße Lösung dieser Aufgabe besteht bei dem Durchflussmengenregler der eingangs erwähnten Art insbesondere darin, dass im Bereich des Steuerzapfens oder Regelkerns der ersten Regler-Einheit eine weitere zweite Regler-Einheit vorgesehen ist, dass der Steuerzapfen der ersten Regler-Einheit dazu eine zentrale Durchtrittsöffnung hat, in welcher die zweite Regler-Einheit vorgesehen ist, und dass die zweite Regler-Einheit ebenfalls in einem Durchtrittskanal einen Steuerzapfen oder Regelkern hat, den ein ringförmiger Drosselkörper aus elastischem Material umgreift, der zwischen sich sowie dem Steuerzapfen und/oder einer den Durchtrittskanal der zweiten Regler-Einheit begrenzenden Gehäusewandung einen weiteren Steuerspalt begrenzt.

Der erfindungsgemäße Durchflussmengenregler nutzt einen vergleichsweise großen Leitungsquerschnitt durch zumindest zwei, vorzugsweise koaxiale und funktionell voneinander unabhängige Regler-Einheiten. Eine den äußeren Leitungsquerschnitt ausfüllende erste Regler-Einheit weist im Bereich ihres Steuerzapfens eine, im wesentlichen auf den zentralen Leitungsquerschnitt beschränkte weitere zweite Regler-Einheit auf. Während mit der ersten, vergleichsweise großen Regler-Einheit auch hohe Literleistungen pro Zeiteinheit eingeregelt werden können, ist mit der demgegenüber kleineren zweiten Regler-Einheit eine Feindosierung der durchströmenden Wassermenge möglich. Mit Hilfe des erfindungsgemäßen, aus zumindest zwei Regler-Einheiten bestehenden Durchflussmengenreglers lässt sich die durchströmende

Wassermenge auch in Trink- und Nutzwassernetzen mit großen Leitungsquerschnitten präzise einregeln.

Weitere vorteilhafte Ausgestaltungen des erfindungsgemäßen Durchflussmengenreglers sind in den Unteransprüchen noch näher beschrieben.

Nachstehend wird die Erfindung anhand verschiedener Ausführungsbeispiele dargestellt. Die einzelnen Merkmale können je für sich oder zu mehreren bei einer Ausführungsform gemäß der Erfindung verwirklicht sein.

Es zeigt:
- Fig.1: einen in einem Längsschnitt dargestellten Durchflussmengenregler mit zwei Regler-Einheiten, wobei eine zentrale Regler-Einheit in eine Durchflussöffnung im Steuerzapfen der äußeren Regler-Einheit einsetzbar ist,
- Fig.2: den Durchflussmengenregler aus Figur 1 in einer Draufsicht,
- Fig.3: einen in einem Längsschnitt dargestellten und mit Figur 1 und 2 vergleichbaren Durchflussmengenregler, wobei der hier dargestellte Durchflussmengenregler beidseits eines ringförmigen Drosselkörpers der äußeren Regler-Einheit Regulierausnehmungen hat,
- Fig.4: den Durchflussmengenregler aus Figur 3 in einer Draufsicht,
- Fig.5: einen Durchflussmengenregler in einem Längsschnitt, bei dem in den Steuerzapfen einer äußeren Regler-Einheit eine weitere zentrale Regler-Einheit integriert ist,
- Fig.6: den Durchflussmengenregler aus Figur 5 in einer Draufsicht,
- Fig.7: einen mit Figur 5 und 6 vergleichbaren Durchflussmengenregler in einem Längsschnitt, bei welchem jedoch der Drosselkörper der äußeren Regler-Einheit nur mit auf seiner Innenseite angeordneten Regulierausnehmungen zusammenwirkt,
- Fig.8: den Durchflussmengenregler aus Figur 7 in einer Draufsicht,
- Fig.9: einen Durchflussmengenregler in einem Längsschnitt, bei welchem der Steuerzapfen einer äußeren Regler-Einheit das Gehäuse einer inneren Regler-Einheit bildet,
- Fig.10: den Durchflussmengenregler aus Figur 9 in einer Draufsicht,
- Fig.11: einen Durchflussmengenregler, bei welchem das Gehäuse einer inneren Regler-Einheit den Steuerzapfen einer äußeren Regler-Einheit bildet,
- Fig.12: den Durchflussmengenregler aus Figur 11 in einer Draufsicht,
- Fig.13: einen mit Figur 11 und 12 vergleichbaren Durchflussmengenregler in einem Längsschnitt, und
- Fig.14: den Durchflussmengenregler aus Figur 13 in einer Draufsicht.

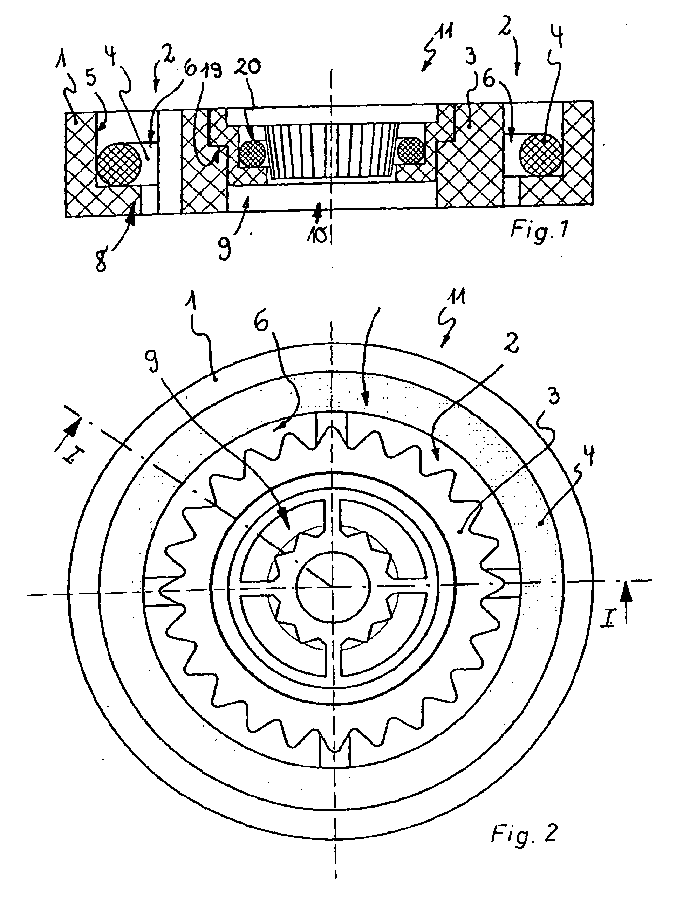

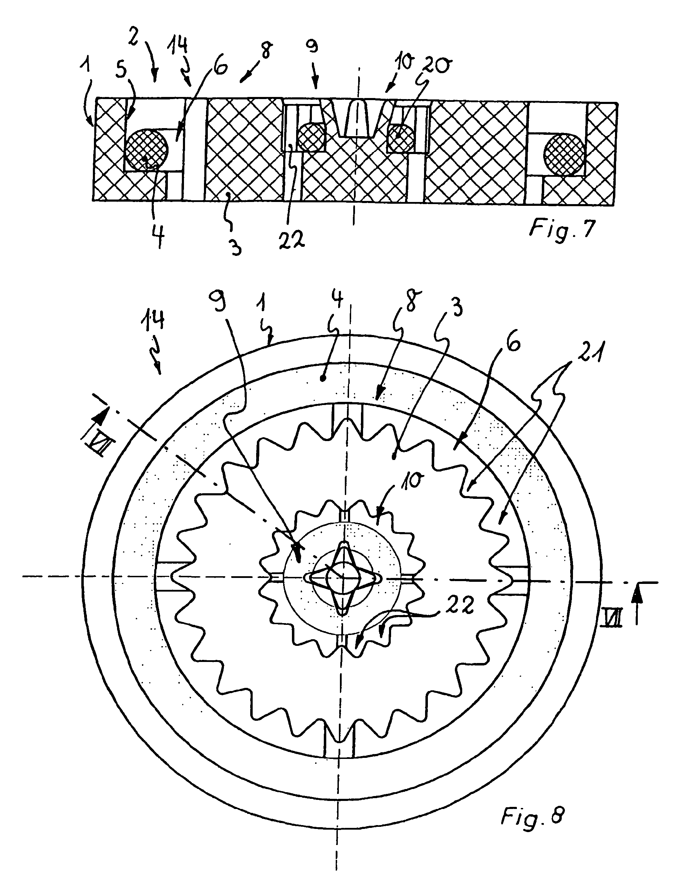

In den Figuren 1 bis 14 sind verschiedene Ausführungen 11 bis 17 von Durchflussmengenreglern dargestellt. Die in den Figuren 1 bis 14 dargestellten Durchflussmengenregler sind in sanitäre Wasserleitungen einsetzbar, um die Durchflussleistung auf eine bestimmte, vom Druck des Versorgungsnetzes nahezu unabhängige maximale Durchflussmenge pro Zeiteinheit einzuregeln. Die in eine Flüssigkeitsleitung einsetzbaren Durchflussmengenregler 11 bis 17 weisen jeweils ein äußeres Reglergehäuse 1 auf, das in einem Durchtrittskanal 2 einen Steuerzapfen 3 hat, den ein ringförmiger Drosselkörper 4 aus elastischem Material umgreift, der zwischen sich und dem Steuerzapfen oder Regelkern 3 und/oder dem Innenumfang 5 des Reglergehäuses 1 einen Steuerspalt 6 bzw. 7 begrenzt, dessen Durchtrittsquerschnitt durch den sich unter der beim Durchströmen bildenden Druckdifferenz verformenden Drosselkörper 4 veränderbar ist. Dieser vom Reglergehäuse 1 umschlossene Durchflussmengenregler bildet eine erste Regler-Einheit 8, wobei im Bereich des Steuerzapfens 3 der ersten Regler-Einheit ein weiterer Durchflussmengenregler als zweite Regler-Einheit 9 vorgesehen ist.

Die hier dargestellten Durchflussmengenregler 11 bis 17 nutzen einen vergleichsweise großen Leitungsquerschnitt durch zwei koaxiale und funktionell voneinander unabhängige Regler-Einheiten 8, 9. Die den äußeren Leitungsquerschnitt ausfüllende erste Regler-Einheit 8 weist im Bereich ihres Steuerzapfens 3 eine, im wesentlichen auf den zentralen Leitungsquerschnitt beschränkte weitere zweite Regler-Einheit 9 auf. Während mit der ersten, vergleichsweise großen Regler-Einheit auch hohe Literleistungen pro Zeiteinheit eingeregelt werden können, ist mit der demgegenüber kleineren zweiten Regler-Einheit 9 eine Feindosierung der durchströmenden Wassermenge möglich. Mit Hilfe der aus zumindest zwei Regler-Einheiten 8, 9 bestehenden Durchflussmengenregler 11 bis 17 lässt sich die durchströmende Wassermenge auch in Trink- oder Nutzwassernetzen mit großen Leitungsquerschnitten präzise einregeln.

Wie aus den Figuren deutlich wird, weist der Steuerzapfen 3 der ersten Regler-Einheit 8 eine vorzugsweise zentrale Durchtrittsöffnung 10 auf, in welcher die zweite Regler-Einheit 9 vorgesehen ist.

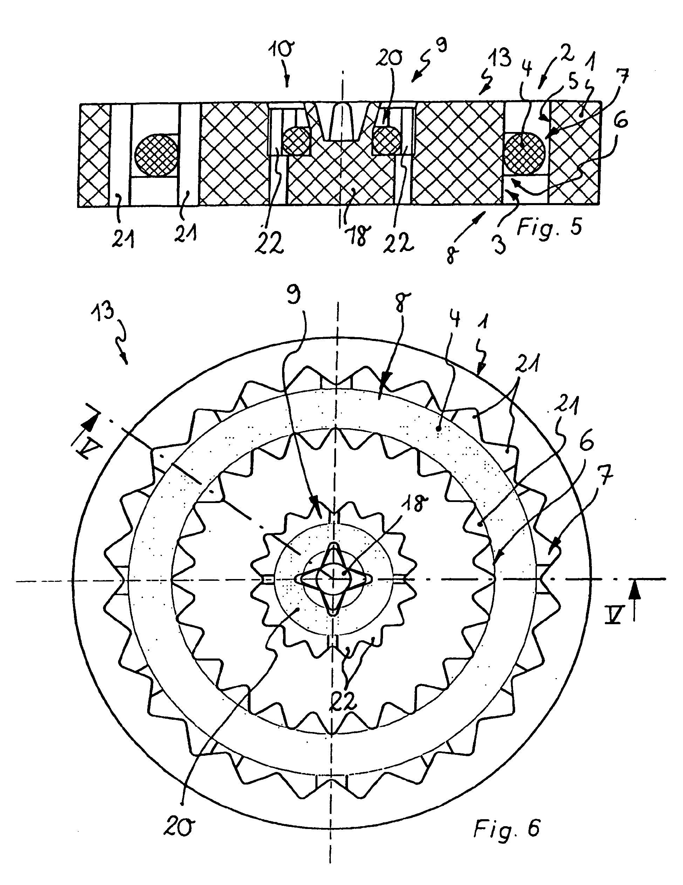

In den Figuren 5 bis 14 hat die zweite Regler-Einheit 9 einen Steuerzapfen 18, der in der Durchtrittsöffnung 10 vorgesehen ist. Dabei ist zwischen dem Steuerzapfen 18 der zweiten Regler-Einheit 9 einerseits und der die Durchtrittsöffnung 10 begrenzenden Umfangswandung andererseits ein aus elastischem Material bestehender ringförmiger Drosselkörper 20 der zweiten Regler-Einheit 9 vorgesehen.

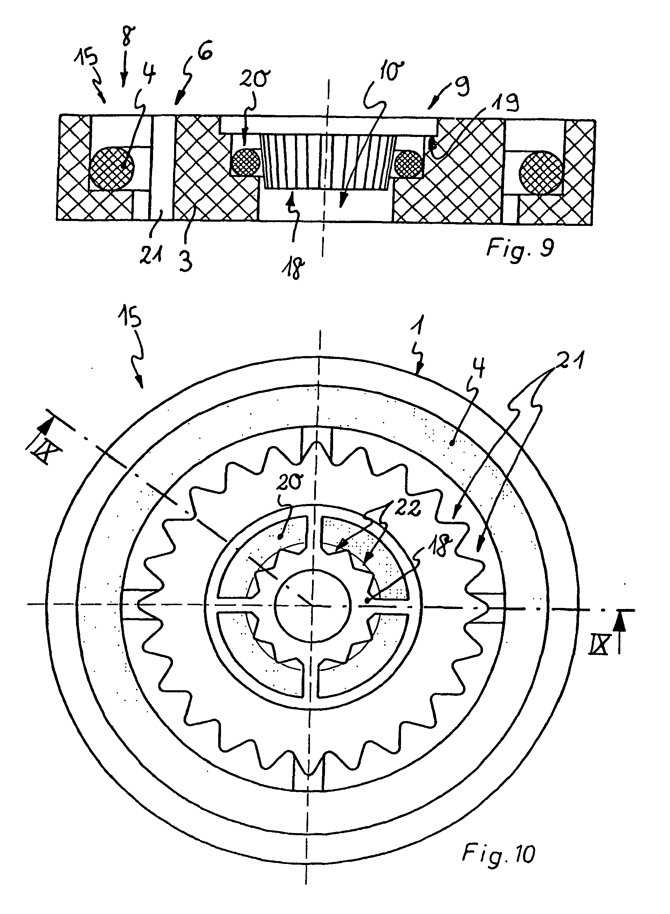

In den Figuren 9 bis 12 ist dargestellt, dass der Steuerzapfen 18 der zweiten Regler-Einheit 9 als ein in die Durchtrittsöffnung 10 einsetzbares Einsetzteil ausgestaltet ist.

Wie aus den Figuren 1 bis 4 und 9 bis 14 deutlich wird, kann das Reglergehäuse der zweiten Regler-Einheit 9 oder dessen als Einsetzteil ausgestalteter Steuerzapfen 18 von der Zuströmseite der ersten Regler-Einheit 8 aus bis zu einem Einsteck-Anschlag 19 in die Durchtrittsöffnung 10 einsetzbar sein.

Dieser Einsteckanschlag 19 ist bei den Durchflussmengenreglern 11, 12, 15 und 17 als ein am Innenumfang der Durchtrittsöffnung 10 vorgesehener Ringflansch ausgestaltet.

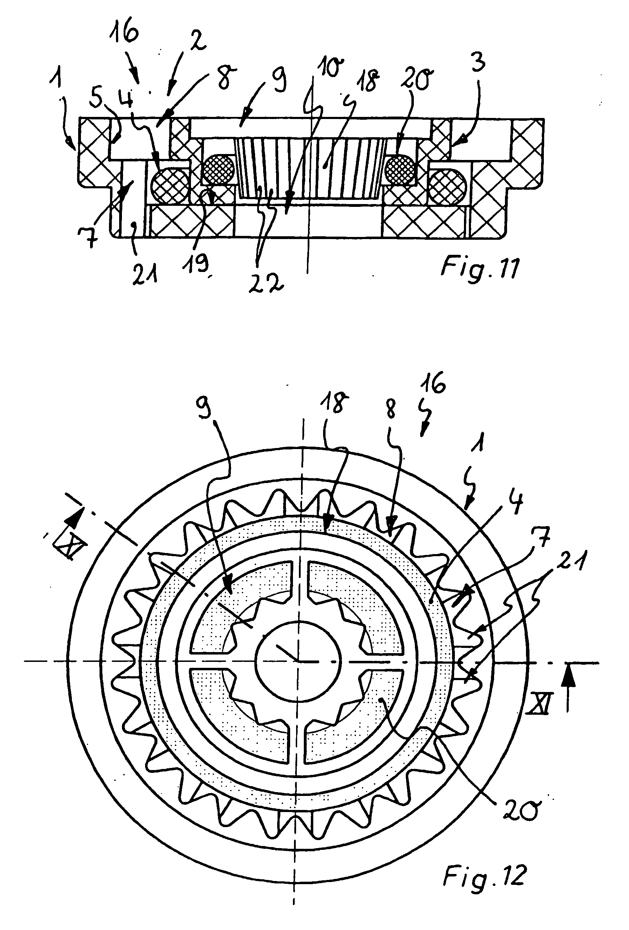

Bei dem Durchflussmengenregler 16 gemäß Figur 11 und 12 ist in das Reglergehäuse 1 der ersten Regler-Einheit 8 das Reglergehäuse der zweiten Regler-Einheit 9 einsetzbar, wobei das Reglergehäuse der zweiten Regler-Einheit 9 und insbesondere dessen Gehäuseumfang den Steuerzapfen 3 des ersten Durchflussmengenreglers 8 bildet.

Anhand der Durchflussmengenregler 13, 14 gemäß den Figuren 5 bis 8 wird deutlich, dass das Reglergehäuse 1 der ersten Regler-Einheit 8 deren Steuerzapfen 3 und der Steuerzapfen 18 der zweiten Regler-Einheit 9 einstückig miteinander zu einer Einbaueinheit verbunden sein können, wobei diese Einbaueinheit jeweils einen Ringkanal zur Aufnahme des Drosselkörpers 4 der ersten Regler-Einheit 8 bzw. des Drosselkörpers 19 der zweiten Regler-Einheit 9 aufweist.

In den Figuren 1, 2 und 7 bis 14 ist dargestellt, dass am Steuerzapfen 3 oder am Gehäuse-Innenumfang der ersten Regler-Einheit 8 in Umfangsrichtung voneinander beabstandete und in Durchflussrichtung orientierte Regulierausnehmungen 21 vorgesehen sind.

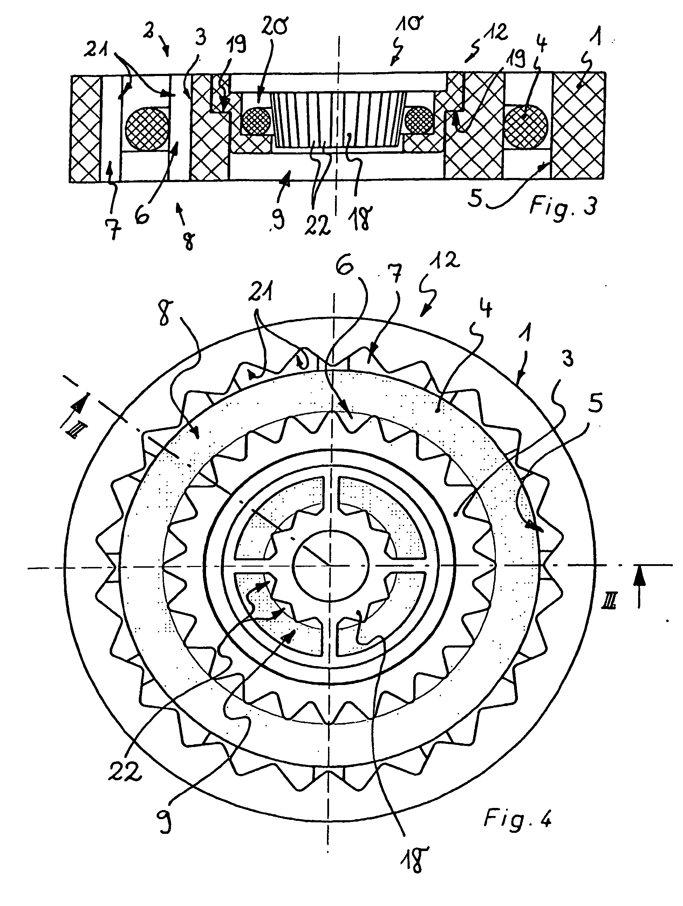

Bei den Durchflussmengenreglern 12 und 13 gemäß den Figuren 3 bis 6 sind solche Regulierausnehmungen 21 sowohl am Steuerzapfen 3 als auch am Gehäuse-Innenumfang der ersten Regler-Einheit 8 vorgesehen.

Bei den Durchflussmengenreglern 11, 12 und 15 bis 17 sind am Steuerzapfen 18 der zweiten Regler-Einheit 9 ebenfalls entsprechende, in Umfangsrichtung voneinander beabstandete und in Durchflussrichtung orientierte Regulierausnehmungen 22 vorgesehen. Die Durchflussmengenregler 13 und 14 gemäß den Figuren 5 bis 8 weisen demgegenüber solche Regulierausnehmungen 22 an der den Steuerspalt der zweiten Regler-Einheit begrenzenden Umfangswandung auf. Die Regulierausnehmungen 21, 22 werden hier zwischen voneinander beabstandeten prismenförmigen Ausformungen begrenzt.

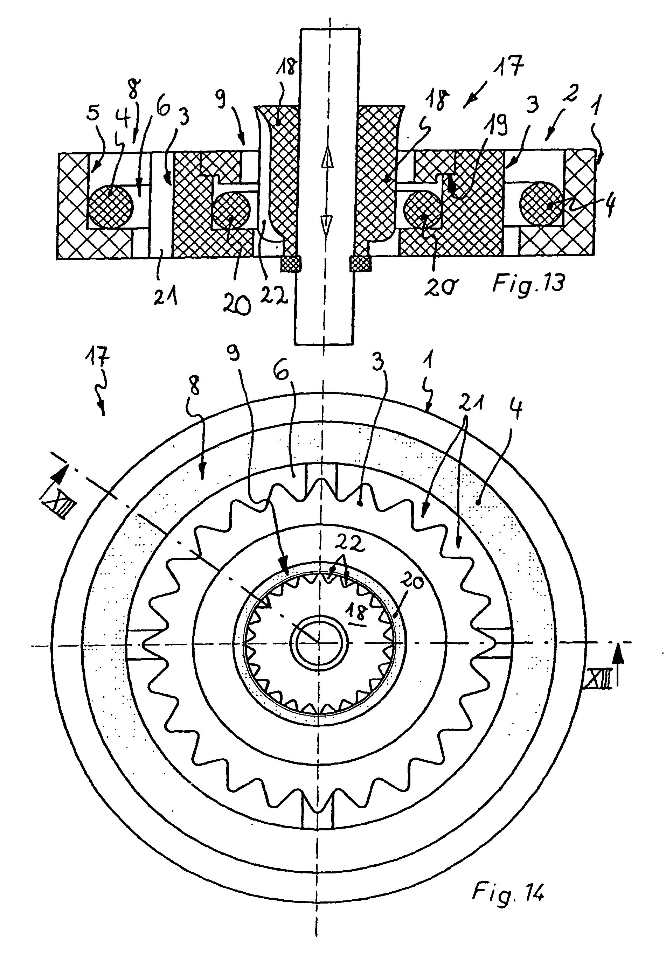

In den Figuren 13 und 14 ist ein Durchflussmengenregler 17 dargestellt, dessen äußere Regler-Einheit 8 eine definierte Basisleistung hat, während der lichte Durchflussquerschnitt im Steuerspalt der inneren Regler-Einheit 9 variabel ist. Wie in Fig.13 angedeutet ist, ist der Steuerzapfen 18 der Regler-Einheit 9 dazu relativ zum Drosselkörper 20 in axialer Richtung verstellbar gehalten. Der Steuerzapfen 18 kann über ein vorzugsweise selbstsicherndes Gewinde oder Einstellgetriebe im Durchflussmengenregler 17 gehalten sein, das eine Drehbewegung am Steuerzapfen 18 in eine axiale Bewegung umsetzt. Möglich ist aber auch, dass das axiale Verschieben des Steuerzapfens 18 durch eine direkte Translationsbewegung und eine nachfolgende axiale Fixierung erfolgt. Der Steuerzapfen 18 und die an ihm vorgesehenen Regulierausnehmungen 22 verjüngen sich von unten nach oben bzw. von oben nach unten zumindest abschnittsweise, so dass durch ein axiales Verstellen des Steuerzapfens 18 im Durchflussmengenregler 17 der in der inneren Regler-Einheit 9 vorgesehene Steuerspalt verkleinert oder vergrößert und damit gleichzeitig die Gesamtleistung des Durchflussmengenreglers 17 bedarfsweise auf ein bestimmtes Maß eingeregelt werden kann.

Der Durchflussmengenregler 17 ist durch axiales Verschieben des in der inneren Regler-Einheit 9 vorgesehenen Steuerzapfens 18 auf unterschiedliche Durchflussleistungen einstellbar, so dass auch für ein Feinjustieren des Durchflussmengenreglers 17 keine verschiedenen Regler-Einheiten oder dergleichen Einzelteile vorgehalten werden müssen. Durch die spezielle Bauform des Steuerzapfens oder Regelkerns 18, dessen Regulierausnehmungen 22 von unten nach oben bzw. von oben nach unten verjüngend verlaufen, kommt es bei unterschiedlichen axialen Positionen auf der Höhe des O-ringförmigen Drosselkörpers 20 zu unterschiedlichen freien Querschnittsflächen zwischen Drosselkörper 20 und Steuerzapfen 18. Diese unterschiedlichen freien Durchtrittsflächen ermöglichen unterschiedliche Literleistungen des Durchflussmengenreglers 17. Eine Regelwirkung bleibt wegen der Funktion des Drosselkörpers 20 mit der Profilaußenkontur des Steuerzapfens 18 jedoch stets gegeben. Wie bereits erwähnt, kann das axiale Verschieben des Steuerzapfens 18 entweder durch direkte Translationsbewegung und axiale Fixierung, oder aber durch Rotation des Steuerzapfens 18 bzw. eines an ihm vorgesehenen Bedienungsgriffes und Zwischenschalten eines Gewindes auf ein Bewegungsübersetzer erreicht werden, welcher die Rotationsbewegung in eine Translationsbewegung umsetzt.

Aus den Figuren 1 bis 4 und 9 bis 14 wird deutlich, dass die hier dargestellten Durchflussmengenregler auch modular aufgebaut sein können, und dass wenigstens einer ersten Regler-Einheit 8 mehrere, wahlweise einsetzbare zweite Regler-Einheiten 9 zugeordnet sein können. Ein derart modular aufgebauter Durchflussmengenregler erlaubt eine exakte und individuelle Anpassung der maximalen Durchflussleistung bei vergleichsweise geringer Lagerhaltung einzelner Regler-Einheiten 8, 9.

## Patentansprüche

1. Durchflussmengenregler (11, 12, 13, 14, 15, 16, 17) mit einer Regler-Einheit (8), die ein Reglergehäuse (1) hat, das in einem Durchtrittskanal (2) einen Steuerzapfen oder Regelkern (3) aufweist, den ein ringförmiger Drosselkörper (4) aus elastischem Material umgreift, welcher Drosselkörper (4) zwischen sich sowie dem Steuerzapfen (3) und/oder dem Gehäuse-Innenumfang einen Steuerspalt (6; 7) begrenzt, dessen Durchtrittsquerschnitt durch den sich unter der beim Durchströmen bildenden Druckdifferenz verformenden Drosselkörper (4) veränderbar ist, **dadurch gekennzeichnet, dass** im Bereich des Steuerzapfens oder Regelkerns (3) der ersten Regler-Einheit (8) eine weitere zweite Regler-Einheit (9) vorgesehen ist, dass der Steuerzapfen (3) der ersten Regler-Einheit (8) dazu eine zentrale Durchtrittsöffnung (10) hat, in welcher die zweite Regler-Einheit (9) vorgesehen ist, und dass die zweite Regler-Einheit (9) ebenfalls in einem Durchtrittskanal einen Steuerzapfen oder Regelkern (18) hat, den ein ringförmiger Drosselkörper (19) aus elastischem Material umgreift, der zwischen sich sowie dem Steuerzapfen (18) und/oder einer den Durchtrittskanal der zweiten Regler-Einheit begrenzenden Gehäusewandung einen weiteren Steuerspalt begrenzt (vgl. Fig.1 bis 14).

2. Durchflussmengenregler nach Anspruch 1, **dadurch gekennzeichnet, dass** die zweite Regler-Einheit (9) einen Steuerzapfen (18) hat, der in der Durchtrittsöffnung (10) vorgesehen ist und dass zwischen dem Steuerzapfen (18) der zweiten Regler-Einheit (9) einerseits und der die Durchtrittsöffnung (10) begrenzenden Umfangswandung andererseits ein aus elastischem Material bestehender ringförmiger Drosselkörper (19) der zweiten Regler-Einheit (9) vorgesehen ist (vgl. Fig.5 bis 10, 13 und 14).

3. Durchflussmengenregler nach Anspruch 1 oder 2, **dadurch gekennzeichnet, dass** der Steuerzapfen (18) der zweiten Regler-Einheit (9) als ein in die Durchtrittsöffnung (10) einsetzbares Einsetzteil vorgesehen ist.

4. Durchflussmengenregler nach einem der Ansprüche 1 bis 3, **dadurch gekennzeichnet, dass** das Reglergehäuse der zweiten Regler-Einheit (9) oder deren als Einsetzteil ausgestalteter Steuerzapfen (18) von der Zuströmseite der ersten Regler-Einheit (8) aus bis zu einem Einsteckanschlag (19) in die Durchtrittsöffnung (10) einsetzbar ist.

5. Durchflussmengenregler nach einem der Ansprüche 1 bis 4, **dadurch gekennzeichnet, dass** der Einsteckanschlag (19) als ein am Innenumfang der Durchtrittsöffnung (10) vorgesehener Ringflansch (20) ausgestaltet ist.

6. Durchflussmengenregler nach einem der Ansprüche 1 bis 5, **dadurch gekennzeichnet, dass** in das Reglergehäuse (1) der ersten Regler-Einheit (8) das Reglergehäuse einer weiteren zweiten Regler-Einheit (9) einsetzbar ist, dessen Gehäuseaußenumfang den Steuerzapfen oder Regelkern (3) der ersten Regler-Einheit (8) bildet.

7. Durchflussmengenregler nach einem der Ansprüche 1 bis 6, **dadurch gekennzeichnet, dass** das Reglergehäuse (1) der ersten Regler-Einheit (8), deren Steuerzapfen (3) und der Steuerzapfen (18) der zweiten Regler-Einheit (9) einstückig miteinander zu einer Einbaueinheit verbunden sind, und dass diese Einbau-Einheit jeweils einen Ringkanal zur Aufnahme des Drosselkörpers (4, 20) der ersten Regler-Einheit (8) bzw. der zweiten Regler-Einheit (9) aufweist.

8. Durchflussmengenregler nach einem der Ansprüche 1 bis 7, **dadurch gekennzeichnet, dass** am Steuerzapfen (3) und/oder am Gehäuse-Innenumfang der ersten Regler-Einheit (8) in Umfangsrichtung voneinander beabstandete und in Durchflussrichtung orientierte Regulierausnehmungen (21) vorgesehen sind.

9. Durchflussmengenregler nach einem der Ansprüche 1 bis 8, **dadurch gekennzeichnet, dass** am Steuerzapfen (18) und/oder an der den Steuerspalt der zweiten Regler-Einheit (9) begrenzenden Umfangswandung in Umfangsrichtung voneinander beabstandete und in Durchflussrichtung orientierte Regulierausnehmungen (22) vorgesehen sind.

10. Durchflussmengenregler nach einem der Ansprüche 1 bis 9, **dadurch gekennzeichnet, dass** der Durchflussmengenregler (11, 12, 15, 16, 17) modular aufgebaut ist und dass wenigstens einer ersten Regler-Einheit (8) mehrere, unterschiedlich ausgestaltete und wahlweise einsetzbare zweite Regler-Einheiten (9) zugeordnet sind.

11. Durchflussmengenregler nach einem der Ansprüche 1 bis 10, **dadurch gekennzeichnet, dass** der lichte Durchflussquerschnitt im Steuerspalt zumindest einer Regler-Einheit (9) variabel ist, dass der Gehäuse-Innenumfang, der Steuerzapfen (18) oder Regelkern und/oder die dort vorgesehenen Regulierausnehmungen sich in axialer Richtung zumindest abschnittsweise verjüngen oder erweitern und dass der Drosselkörper (20) der zumindest einen Regler-Einheit (9) relativ zum Gehäuse-Innenumfang und/oder zum Steuerzapfen (18) bzw. Regelkern in axialer Richtung verstellbar ist.

12. Durchflussmengenregler nach einem der Ansprüche 1 bis 11, **dadurch gekennzeichnet, dass** der Steuerzapfen (18) oder Regelkern der zumindest einen Regler-Einheit (9) in axialer Richtung verstellbar im Durchflussmengenregler (17) gehalten ist.

13. Durchflussmengenregler nach einem der Ansprüche 1 bis 12, **dadurch gekennzeichnet, dass** die äußere Regler-Einheit (8) des Durchflussmengenreglers (17) eine definierte Basisleistung hat und dass der lichte Durchflussquerschnitt im Steuerspalt der inneren Regler-Einheit (9) variabel ist.

## Claims

1. Flow rate regulator (11, 12, 13, 14, 15, 16, 17) having a regulator unit (8) which has a regulator housing (1) that comprises, in a throughflow channel (2), a control pin or regulator core (3) surrounded by an annular throttle member (4) made of elastic material, said throttle member (4) defining between itself and the control pin (3) and/or the Inner circumference of the housing a control slot (6; 7) the cross-section of flow of which can be varied by the throttle member (4) deforming under the pressure difference produced during throughflow, **characterised in that** In the region of the control pin or regulator core (3) of the first regulator unit (8) a further, second regulator unit (9) is provided, **In that** the control pin (3) of the first regulator unit (8) has for this purpose a central throughflow opening (10) in which the second regulator unit (9) is provided, and **in that** the second regulator unit (9) also has, in a throughflow channel, a control pin or regulator core (18) surrounded by an annular throttle member (19) made of elastic material, which defines another control slot between itself and the control pin (18) and/or a housing wall that defines the throughflow channel of the second regulator unit.

2. Flow rate regulator according to claim 1, **characterised In that** the second regulator unit (9) has a control pin (18) which is provided In the throughflow opening (10), and **in that** between the control pin (18) of the second regulator unit (9) on the one hand and the circumferential wall defining the throughflow opening (10) on the other hand is provided an annular throttle member (19) of the second regulator unit (9), said throttle member (19) being made of elastic material.

3. Flow rate regulator according to claim 1 or 2, **characterised in that** the control pin (18) of the second regulator unit (9) is provided as an insert that can be inserted in the throughflow opening (10).

4. Flow rate regulator according to one of claims 1 to 3, **characterised in that** the regulator housing of the second regulator unit (9) or its control pin (18) embodied as an insert can be inserted in the throughflow opening (10) from the inflow side of the first regulator unit (8) up to an insertion stop (19).

5. Flow rate regulator according to one of claims 1 to 4, **characterised in that** the insertion stop (19) is embodied as an annular flange (20) provided on the Inner circumference of the throughflow opening (10).

6. Flow rate regulator according to one of claims 1 to 5, **characterised in that** the regulator housing of another, second regulator unit (9) can be inserted in the regulator housing (1) of the first regulator unit (8), the outer circumference of the housing of said second regulator unit (9) forming the control pin or regulator core (3) of the first regulator unit (8).

7. Flow rate regulator according to one of claims 1 to 6, **characterised in that** the regulator housing (1) of the first regulator unit (8), its control pin (3) and the control pin (18) of the second regulator unit (9) are joined together in one piece to form an insertable unit, and **in that** this insertable unit comprises in each case an annular channel for receiving the throttle member (4, 20) of the first regulator unit (8) or the second regulator unit (9).

8. Flow rate regulator according to one of claims 1 to 7, **characterised in that** on the control pin (3) and/or on the inner circumference of the housing of the first regulator unit (8) are provided regulating recesses (21) spaced apart from one another in the circumferential direction and oriented in the direction of throughflow.

9. Flow rate regulator according to one of claims 1 to 8, **characterised in that** on the control pin (18) and/or on the circumferential wall that bounds the control slot of the second regulator unit (9) are provided regulating recesses (22) spaced apart from one another in the circumferential direction and oriented in the direction of throughflow.

10. Flow rate regulator according to one of claims 1 to 9, **characterised in that** the flow rate regulator (11, 12, 15, 16, 17) is of modular construction and **in that** a plurality of differently constructed second regulator units (9) which can be used selectively are associated with at least one first regulator unit (8).

11. Flow rate regulator according to one of claims 1 to 10, **characterised in that** the internal cross-section of flow in the control slot of at least one regulator unit (9) is variable, **in that** the inner circumference of the housing, the control pin (18) or regulator core and/or the regulating recesses provided thereon become narrower or widen out in the axial direction at least in parts and **in that** the throttle member (20) of the at least one regulating unit (9) is adjustable in the axial direction relative to the inner circumference of the housing and/or to the control pin (18) or regulator core.

12. Flow rate regulator according to one of claims 1 to 11, **characterised in that** the control pin (18) or regulator core of the at least one regulator unit (9) is held in the flow rate regulator (17) so as to be adjustable in the axial direction.

13. Flow rate regulator according to one of claims 1 to 12, **characterised in that** the outer regulator unit (8) of the flow rate regulator (17) has a defined basic power output and **in that** the internal cross-section of throughflow in the control gap of the inner regulator unit (9) is variable.

## Revendications

1. Régulateur de débit (11, 12, 13, 14, 15, 16, 17), avec une unité de régulation (8) qui possède un boîtier (1) présentant, dans un canal de passage (2), un cône de commande ou noyau de régulation (3) qui est entouré par un corps d'étranglement annulaire (4) en matériau élastique, le corps d'étranglement (4) délimitant entre lui-même et le cône de commande (3) et/ou le pourtour intérieur du boîtier une fente de commande (6 ; 7) dont la section de passage peut être modifiée par le corps d'étranglement (4) qui se déforme sous l'effet de la différence de pression qui s'établit lors de l'écoulement, **caractérisé en ce qu'**une deuxième unité de régulation (9) est prévue dans la région du cône de commande ou noyau de régulation (3) de la première unité de régulation (8), **en ce que** le cône de commande (3) de la première unité de régulation (8) possède à cet effet une ouverture de passage centrale (10), dans laquelle est prévue la deuxième unité de régulation (9), et **en ce que** la deuxième unité de régulation (9) possède elle aussi, dans un canal de passage, un cône de commande ou noyau de régulation (18) qui est entouré par un corps d'étranglement annulaire (19) en matériau élastique, le corps d'étranglement (19) délimitant entre lui-même et le cône de commande (18), et/ou une paroi de boîtier délimitant le canal de passage de la deuxième unité de régulation, une autre fente de commande.

2. Régulateur de débit selon la revendication 1, **caractérisé en ce que** la deuxième unité de régulation (9) possède un cône de commande (18) qui est prévu dans l'ouverture de passage (10), et **en ce qu'**un corps d'étranglement annulaire (19), constitué d'un matériau élastique, de la deuxième unité de régulation (9) est prévu entre le cône de commande (18) de la deuxième unité de régulation (9) d'une part et la paroi périphérique délimitant l'ouverture de passage (10) d'autre part.

3. Régulateur de débit selon la revendication 1 ou 2, **caractérisé en ce que** le cône de commande (18) de la deuxième unité de régulation (9) est prévu sous la forme d'une pièce d'insertion pouvant être insérée dans l'ouverture de passage (10).

4. Régulateur de débit selon l'une des revendications 1 à 3, **caractérisé en ce que** le boîtier de la deuxième unité de régulation (9), ou le cône de commande (18) de celle-ci réalisé sous forme de pièce d'insertion, peut être inséré dans l'ouverture de passage (10) depuis le côté de flux entrant de la première unité de régulation (8) jusqu'à une butée d'insertion (19).

5. Régulateur de débit selon l'une des revendications 1 à 4, **caractérisé en ce que** la butée d'insertion (19) est réalisée sous la forme d'une bride annulaire (20) prévue sur le pourtour intérieur de l'ouverture de passage (10).

6. Régulateur de débit selon l'une des revendications 1 à 5, **caractérisé en ce que** le boîtier d'une deuxième unité de régulation (9), dont le pourtour extérieur de boîtier forme le cône de commande ou noyau de régulation (3) de la première unité de régulation (8), peut être inséré dans le boîtier (1) de la première unité de régulation (8).

7. Régulateur de débit selon l'une des revendications 1 à 6, **caractérisé en ce que** le boîtier (1) de la première unité de régulation (8), le cône de commande (3) de celle-ci et le cône de commande (18) de la deuxième unité de régulation (9) sont reliés entre eux d'un seul tenant en une unité de montage, et **en ce que** cette unité de montage présente un canal annulaire respectif pour recevoir le corps d'étranglement respectif (4, 20) de la première unité de régulation (8) et de la deuxième unité de régulation (9).

8. Régulateur de débit selon l'une des revendications 1 à 7, **caractérisé en ce que** des évidements de régulation (21), mutuellement distants en direction périphérique et orientés dans la direction d'écoulement, sont prévus sur le cône de commande (3) et/ou sur le pourtour intérieur de boîtier de la première unité de régulation (8).

9. Régulateur de débit selon l'une des revendications 1 à 8, **caractérisé en ce que** des évidements de régulation (22), mutuellement distants en direction périphérique et orientés dans la direction d'écoulement, sont prévus sur le cône de commande (18) et/ou sur la paroi périphérique délimitant la fente de commande de la deuxième unité de régulation (9).

10. Régulateur de débit selon l'une des revendications 1 à 9, **caractérisé en ce que** le régulateur de débit (11, 12, 15, 16, 17) est réalisé de structure modulaire, et **en ce que** plusieurs deuxièmes unités de régulation (9), de configurations différentes et pouvant être sélectivement insérées, sont associées à au moins une première unité de régulation (8).

11. Régulateur de débit selon l'une des revendications 1 à 10, **caractérisé en ce que** la section de passage dans la fente de commande d'au moins une unité de régulation (9) est variable, **en ce que** le pourtour intérieur de boîtier, le cône de commande (18) ou noyau de régulation et/ou les évidements de régulation qui y sont prévus se rétrécissent ou s'élargissent au moins sectoriellement en direction axiale, et **en ce que** le corps d'étranglement (20) de l'unité de régulation au moins unique (9) est réglable en direction axiale par rapport au pourtour intérieur de boîtier et/ou au cône de commande (18) ou noyau de régulation.

12. Régulateur de débit selon l'une des revendications 1 à 11, **caractérisé en ce que** le cône de commande (18) ou noyau de régulation de l'unité de régulation au moins unique (9) est maintenu avec possibilité de réglage en direction axiale dans le régulateur de débit (17).

13. Régulateur de débit selon l'une des revendications 1 à 12, **caractérisé en ce que** l'unité de régulation extérieure (8) du régulateur de débit (17) possède une puissance de base définie, et **en ce que** la section de passage dans la fente de commande de l'unité de régulation intérieure (9) est variable.
